# EUROPEAN PATENT APPLICATION

(11) **EP 3 116 242 A1**
(43) Date of publication of application: **11.01.2017**
(21) Application number: 15175832.3
(22) Date of filing: 08.07.2015
(51) Int. Cl.: H04W 4/00, H04W 4/20, H04W 80/00

(54) **METHOD AND APPARATUSES FOR COMMUNICATING MESSAGES BETWEEN USER EQUIPMENTS IN AN LTE COMMUNICATIONS NETWORK**

(71) Applicant: Siemens Aktiengesellschaft, 80333 München (DE)
(72) Inventor: Zeiger, Florian, 85521 Ottobrunn (DE); Walewski, Joachim, 82008 Unterhaching (DE)

(57) **Abstract**

The present invention relates to a method for communicating messages between first and second user equipments (110, 120) in a LTE communications network (100), wherein the user equipments (110, 120) are in direct communication using LTE proximity services. Both the first and second user equipments comprise automation-protocol enablers (114, 124) which receive requirements from first and second automation network nodes coupled to or implemented in connection with the first and second user equipments, and the network (100) comprises an automation-protocol manager (142). The automation-protocol enablers derive parameters from the requirements and transmit said parameters to the automation protocol manager. The auto-mation protocol manager creates a service-parameter set from the received parameters, and controls network entities including at least one base station such that the direct communication between the first and second user equipments is in accordance with the parameter set.

## Description

The present invention relates to a method for communicating messages between user equipments in an LTE communications network. Further, the present invention relates to a user equipment and a base station of an LTE communications network.

Distributed automation relies on effective communication of automation data packages. Many conventional automation protocols rely on layer-2 broadcast mechanisms for at least part of their messages. Mobile network technologies such as long-term evolution (LTE), also known as 4^{th} generation (4G) cellular networks, are currently investigated for their potential to enable communication between nodes of an automation and control network. Current 4G cellular networks are a very promising technology for connecting spatially distributed automation devices at a reasonable cost.

LTE networks, including their evolved packed core (EPC), typically operate on a best-effort principle for delivering non-time critical data. LTE networks are designed to support quality of service (QoS) but have only limited support for the strict QoS requirements set by automation protocols.

It is an object of the present invention to adapt LTE networks to the requirements of automation networks.

In accordance with one aspect of the invention, a method is provided for communicating messages between first and second user equipments in a LTE communications network, wherein the user equipments are in direct communication using LTE proximity services, wherein:
- both the first and second user equipments comprise automation protocol enablers, which receive requirements from first and second automation network nodes coupled to or implemented in connection with the first and second user equipments;
- the network comprises an automation protocol manager;
- the automation protocol enablers derive parameters from the requirements and transmit said parameters to the automation protocol manager;
- the automation protocol manager
   - creates a service parameter set from the received parameters, and
   - provides control information to network entities including at least one base station such that direct communication between the first and second user equipments is in accordance with the parameter set.

The requirements may include QoS requirements and/or protocol requirements such as reliability requirements, security requirements, priority requirements and/or timing requirements. The derived parameters preferably include priority and/or timing parameters and may additionally include reliability and/or security parameters.

In accordance with another aspect of the invention there is provided a user equipment of a LTE communications network which is in direct communication with other user equipment using LTE proximity services. The user equipment is also coupled to or implemented in connection with an automation network node, comprising an automation protocol enabler which receives requirements from the automation network node, derives parameters from the requirements including priority and timing parameters and transmits said parameters to an automation protocol manager of the LTE communications network.

Advantageously, the present invention may utilize the network structure and proposed interface as laid out in 3GPP technical specification 23.303 V12.3.0 (2014-12), available at http://www.3gpp.org/ftp/Specs/archive/23_series/23.303/23303-c30.zip, as will be explained in detail below.

In other aspects of the invention a communications system and a proximity services node of a LTE communications network are provided.

In embodiments of the invention the automation protocol manager communicates status information regarding the conformance of the direct communication with the parameter set to the automation protocol enablers.

In other embodiments of the invention the protocol enablers receive automation network topology information, derive additional parameters thereof and transmit said additional parameters to the automation protocol manager for inclusion in the service parameter set.

In yet other embodiments of the invention the automation protocol enablers perform a conversion of a layer 2 automation protocol (such as CAN, Profibus/Profinet, GOOSE) to a layer 3 transport protocol (typically the internet protocol IP) of the LTE communications network.

In yet other embodiments the automation protocol manager hosts more than one master node of the automation network or is in communication with a register of more than one master node of the automation network and uses a scheduler for managing communication from the master nodes to slave nodes, thereby supporting a multi-master automation system.

Further embodiments, features, and advantages of the present invention will become apparent from the subsequent description and dependent claims when taken in conjunction with the accompanying drawings.
- Fig. 1: shows a schematic diagram of a system implemented in accordance with an embodiment of the present invention;
and
- Fig. 2: shows a functional diagram of two network functions implemented in accordance with embodiments of the present invention.

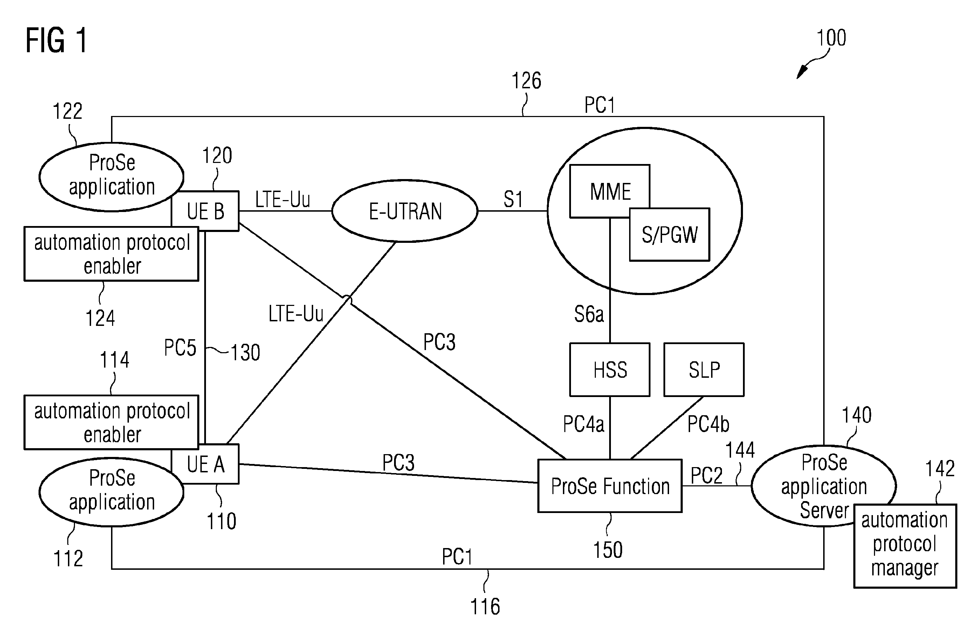

Fig. 1 is an amended version of Figure 4.2-1 of 3GPP TS 23.303 V12.3.0 (2014-12). In many aspects, the system 100 shown in Fig. 1 is identical to Figure 4.2-1 of 3GPP TS 23.303 V12.3.0 (2014-12). Those aspects will not be addressed here in detail as 3GPP TS 23.303 V12.3.0 (2014-12) is readily available to the general public and has detailed explanations as to the functioning of the proximity services which are hereby incorporated by reference. In particular, chapter 4 of TS 23.303 V12.3.0 is hereby incorporated in its entirety, and more particularly the architectural reference models in section 4.2, the list of reference points in section 4.3, and the description of the functional entities.

The present invention utilizes most elements shown in Fig. 4.2-1 of 3GPP TS 23.303 V12.3.0 (2014-12) as prescribed by the relevant 3GPP standards. Therefore, reference numerals are omitted for the following elements and the 3GPP references are used instead: E-UTRAN, MME, S/PGW, HSS, SLP. Likewise, the reference points PC4, PC4a, PC4b, LTE-Uu, S1 (or S1-MME), and S6a are utilized as laid down in 3GPP TS 23.303 V12.3.0 (2014-12).

Fig. 1 shows a first user equipment or mobile station or a LTE gateway 110 (denoted UE A in TS 23.303) and a second user equipment or mobile station 120 (denoted UE B in TS 23.303). Both mobile stations 110, 120 are equipped with the proximity services (ProSe) application 112, 122 in accordance with TS 23.303. Additionally, both mobile stations comprise an automation protocol enabler 114, 124, which is described in detail further below.

The ProSe applications 112, 122 are coupled via reference points PC1 116, 126 to a ProSe application server 140, which in turn is coupled to the ProSe function 150 via reference point PC2 144. The mobile stations 110, 120 or the ProSe applications 112, 122 associated therewith are communicatively coupled to the ProSe function 150 via reference points PC3.

The ProSe application server 140 comprises, or is communicatively coupled to, an automation protocol manager 142 which is described in detail further below. In embodiments of the present invention, the automation protocol manager may also be comprised by, or coupled to, the ProSe function 150.

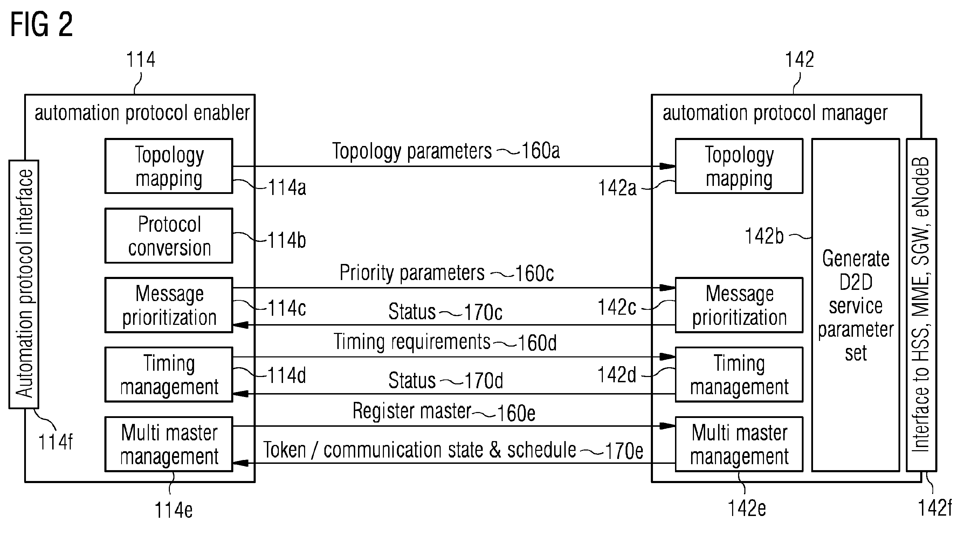

Fig. 2 shows in more detail the functional setup of the three components that the present invention adds to the reference architecture of TS 23.303, namely the two automation protocol enablers 114, 124 and the automation protocol manager.

The automation protocol enabler 114 in embodiments of the invention may comprise a topology-mapping function 114a, a protocol-conversion (or protocol-translation) function 114b, a message prioritization function 114c, a timing-management function 114d, a multi-master management function 114e, and an automation-protocol interface 114f, all of which are explained in detail below. Note well that not all these functions need to be present in each embodiment of the present invention. Protocol conversion may, for example, be carried out somewhere else or not be required at all. In other embodiments there may not be a need for multi-master capability. Consequently, the corresponding functions 114b and/or 114e may not be required in an automation-protocol enabler 114.

The automation-protocol enabler 114 is communicatively coupled to automation-protocol manager 142 which in embodiments of the invention may comprise a topology-mapping function 142a, a message-prioritization function 142c, a timing-management function 142d, a multi-master management function 142e, interfaces to the mobile network entities generally denoted 142f, and a service-parameter-set generation function 142b.

Corresponding functions of the enabler 114 and manager 142 may, in embodiments, exchange information such as topology parameters 160a, priority parameters 160c, timing requirements 160d, or master information 160e. Status information may also be transferred, in embodiments including any or all of the following: status of meeting priority requirements 170c, status of meeting timing requirements 170d, tokens or other information referring to master-slave relationships 170e.

The operation and individual functions of system 100 is now explained in detail.

As pointed out before, LTE today is typically used for best-effort communications applications and was not designed with QoS-demanding automation applications in mind.

In order to reduce the amount of complexity and reduce latency and jitter in the communication and thereby enabling the LTE network to meet QoS requirements, the present invention utilizes interfaces designed for direct communication between the mobile stations 110, 120. The principle of LTE direct communication is generally known to those with skills in the art and which for LTE standardized in 3GPP TS 23.303 V12.3.0 (2014-12) as LTE Proximity Services (LTE ProSe). In accordance with LTE ProSe, a direct LTE radio link between UEs 110, 120 is used for transmitting data between the UEs, while signaling is controlled by the respective eNodeB.

Typical automation protocols such as CANopen or Profibus/ Profinet are tailored to critical industrial applications. There are, for example, tight timing constraints for signaling and media access in order to provide QoS features. Meeting these timing constraints is difficult if not impossible when only using the LTE ProSe.

Therefore, as explained above, in accordance with the present invention, for each UE 110, 120 an automation protocol enabler 114, 124 is provided which interacts with the ProSe application interfaces 112, 122 as defined in the 3GPP standard. The automation-protocol enabler 114, 124 is an entity that enables interactions of UEs 110, 120 with the automation protocol manager 142 for proper handling of specific automation-network characteristics such as topology mapping, protocol conversion, message prioritization, timing management, and/or multi-master management. ProSe applications 112, 122, as defined in the standard, receive communication requirements from the automation protocol enablers 114, 124 and vice versa.

The automation protocol manager 142 is primarily responsible for generating device-to-device (D2D) service parameter sets which are required for proper signaling. Therefore, UEs 110, 120 or their associated automation protocol enablers 114, 124 provide information on topology mapping 160a, message prioritization 160c, timing 160d, and multi-master management 160e, and the automation-protocol manager 142 interfaces to HSS, MME, SGW, and eNodeB/E-UTRAN via ProSe application server 140 and ProSe function 150.

The automation protocol enablers 114, 124 associated with the UEs 110, 120 and the automation protocol manager 142 can be utilized to implement the following functionalities in order to facilitate automation application via LTE proximity services or LTE-direct systems:

### 1. Enablement of communication paradigms

Requirements of industrial applications/processes often result in network topologies such as bus, star, and ring, and automation protocols are designed to support multicast or unicast communication.

Device-to-device communication via LTE direct / LTE Proximity Services on the other hand is based on point-to-point communication between UEs using the LTE radio interface over a shared frequency. Here, channel access is coordinated by the eNodeB.

Thus, in an embodiment of the invention, the automation protocol enabler 114, 124 configures the requirements of the automation protocol locally at the UE 110, 120. The automation protocol enabler 114, 124 then interacts with the automation protocol manager 124 which is located in the operator's network and transmits topology-relevant channel-access information 160a. Additionally, automation-protocol-specific requirements such as the requirement to broadcast alarm messages may be communicated to the automation protocol manager 142.

### Consider the following example:

The automation protocol requires a multicast communication so that UE A may send a message to UE B and UE C (not shown). There are different ways of meeting this requirement:
a) The automation-protocol enabler 114 at UE A 110 sets up separate direct communication links to UE B 110 and UE C. In this case, all relevant signaling requirements need to be generated by the automation protocol manager 142. For example, authentication and access information needs to be exchanged with HSS and signaling requirements need to be exchanged with MME, SGW, and eNodeB.
b) The automation-protocol enabler 114 of UE A 110 directly broadcasts the automation messages to UE "B" 120 and UE C.

In both cases, the eNodeB takes care of channel-access assignments, and HSS, MME, and SGW handle the configuration (e.g., access control, signaling, addressing) based on the parameter set created by the automation-protocol manager 142.

Broadcast or multicast may be very useful in the context of automation protocols such as GOOSE. Traditionally, virtual networks or overlays are created to support multicast groups. In accordance with embodiments of the present invention, such a group may be set up by assigning dedicated slots in the LTE frame for group communication. The parameterization of such a multicast group is being handled by the automation-protocol manager 142 in preferred embodiments.

### 2. Protocol conversion

User-payload data in LTE networks is transported via IP communication on layer 3, whereas automation protocols such as CAN, Profibus/Profinet, or GOOSE utilize lower layers. Consequently, in embodiments of the invention the automation protocol enabler in the UE may implement protocol-translation functionalities using well-known techniques such as payload data conversion, encapsulation, identification of timing requirements, and/or identification of message/data priority.

### 3. Message arbitration/prioritization

Automation protocols often implement QoS mechanisms based on prioritization or arbitration of messages. For example, CAN and CANopen use bit arbitration so that devices with higher priority overwrite messages of lower priority on the bus. Such a prioritization/arbitration mechanism is preferably implemented within automation protocol enablers 114, 124 and/or the automation protocol manager 142, for example by way of emulation. Note that the overwriting of messages is a concept developed in the context of wired communications busses which therefore is not applicable in the context of LTE proximity services / LTE-direct enabled systems.

The automation protocol manager 142 may also be the entity for carrying out the typical functions of bus guardians such as identifying nodes that flood or jam the network and executing corresponding mitigations like disconnecting them to prevent the network from collapsing.

### Consider the following example:

First UE A 110 and second UE B 120 both want to transmit messages to UE C (not shown), with the first UE A 110 having a higher priority than the second UE B 120. The automation protocol enablers 114, 124 of the first and second UEs 110, 120 transmit priority information 160c to the automation protocol manager 142. The automation protocol manager 142 creates all required information so that UE A can send its high-priority messages to UE C and transmits it to the corresponding network entity. For example, access and signaling information is exchanged with HSS, MME, SGW, and eNodeB.

After the high-priority messages are sent, the communication requests of UE B to UE C will be addressed - given that timing requirements are kept (see below). In case lower-priority messages cannot be sent, the automation-protocol manager 142 informs the involved automation-protocol enabler 124 of UE B 120. In that case it is left to the automation protocol in UE B 120 to deal with the resulting situation. The automation protocol may, for example, attempt to resend the message or generate timeout condition.

### 4. Timing

Automation protocols usually have strict timing requirements for sending, receiving, and acknowledging messages to guarantee proper implementation of industry-grade QoS. Timing requirements are often defined by parameters such as bus length, bandwidth, and protocol structure. The automation-protocol enablers 114, 124 of UEs 110, 120 forward timing requirements 160d to the automation-protocol manager 142. The automation protocol manager 142 may then generate access and signaling information for establishing a direct communication link between UEs 110, 120 that satisfies said timing requirements.

In embodiments, the automation protocol manager may monitor the conformance of the direct communication links with the requirements and report a corresponding status to the automation protocol enabler 114, 124.

### Consider the following example:

Proper function of Profibus communication is defined for a specific communication speed. Copper wires or optical fibers are traditionally used as physical media. Timing issues are more likely to occur when wireless links such as LTE ProSe are used. These timing issues may be addressed as follows:
a) In case the LTE link operates at a high speed, the LTE link may be considered similar to the cable connection and timing requirements can be transparently handled. Automation protocol enablers 114, 124 communicate the timing requirements to the automation protocol manager 142. The automation protocol manager 142 creates access and signaling information for HSS, MME, SGW, and eNodeB. UE-to-UE links are established according to these parameters.
b) If the link cannot support the timing requirements of Profibus, the timing needs to be adjusted. This can be done similarly to traditional wireless Profibus solutions, for example by introducing delays between cyclic transmissions. Such a solution requires a multi-master setup similar to traditional wireless Profibus. One master handles wired Profibus communications at the UE and is hosted by the automation-protocol enabler 114, 124 of the UE 110, 120. Another master manages the LTE links and is hosted by the automation protocol manager 142.
c) UEs may be configured to act as gateways. This setup is similar to traditional wireless Profibus systems. The automation protocol enablers of UEs may act as Profibus slaves and signal timing requests to the automation protocol manager and translate/map Profibus raw payload data to a common format which is then used for communication between UEs over the LTE direct link. This functionality may be implemented in conjunction with the protocol conversion mechanism explained above. The automation protocol manager 142 takes care of timing parameterization for the direct device-to-device communication via LTE.

### 5. Support of multi-master systems

Automation protocols such as Profibus support multi-master topologies. Multi-master support may be provided in embodiments of the invention by the automation-protocol manager 142. Masters may be directly hosted in the automation-protocol manager 142. Alternatively, the automation-protocol manager may have access to a register of all masters and uses a scheduler, such as round-robin token passing, for managing communication from masters to their slaves. It is possible to assign master-slave communication to the same "collision domain" (by using the same frequency/code or time slot in LTE) or to different "collision-domains" (by using different frequencies/codes or time slots in LTE).

As discussed above, the system 100 shown schematically in Fig. 1 is largely based on the TS 23.303 reference architecture. The present invention utilizes (and in some cases enhances) the following interfaces or reference points:
Reference point PC1 116, 126 may be used by embodiments of the invention for transferring information such as parameters and status information or error information between the automation protocol manager 142 and the automation protocol enablers 114, 124.
Reference point PC2 144 may be used by embodiments of the invention for transferring information such as access control, signaling, addressing to LTE network entities such as HSS/SLP, MME/SGW or E-UTRAN/eNodeB via the ProSe function 150.

In preferred embodiments of the invention the reference points PC3, PC4a, PC4b, PC5, S6a, S1 remain unmodified.

Embodiments of the present invention may be utilized to create broadcast domains as described in the co-pending international application PCT/EP2015/050676.

Other embodiments of the present invention may be utilized to facilitate multi-owner automation networks by providing multiple automation-protocol enablers per UE and multiple automation-protocol managers. In yet other embodiments, multi-tenant systems may be supported by granting access to the same automation infrastructure for multiple tenants such as operators (for collecting sensor data and send commands to actuators), or maintenance workers (for accessing devices), wherein the automation protocol manager is used to establish different communication channels. Different services may be offered in the same geographic region by using the automation-protocol manager to set up service-specific networks.

Instead of associating the automation protocol manager with the ProSe application server 140 it is also possible to associate it with, or implement it in connection with, a local gateway of a LTE-LIPA-enabled system.

Some embodiments of the present invention allow for the setup of a "physical separation" of communication groups such as multicast groups, with the eNodeB taking care of proper resource assignment. In other embodiments, a "shared communication medium" may be created with the eNodeB assigning UEs to the same "collision-domain" wherein one UE is transmitting and all other UEs in this domain are receiving.

An advantage of having the automation protocol manager take care of prioritization, arbitration, and timing is an increase in bandwidth efficiency of the automation protocol.

### Consider the following example:

As explained above, devices of higher priority can overwrite messages of devices with lower priority in traditional CAN networks (using the arbitration mechanism). Assuming that the LTE network has sufficient bandwidth, the automation protocol manager in embodiments of the present invention first serves the high-priority service requests and afterwards (if timing and resource usage allow for it) the lower priority service requests. The latter can thus be served without overwriting messages or loosing information - leading to an increase of the effective transmission bandwidth of the automation protocol.

The instructions for implementing the processes, methods and/or techniques discussed herein may be provided on computer-readable storage media or memories, such as a cache, buffer, RAM, removable media, hard drive or other computer-readable storage media. Computer-readable storage media include various types of volatile and nonvolatile storage media. The functions, acts or tasks illustrated in the figures or described herein are executed in response to one or more sets of instructions stored in or on computer-readable storage media. The functions, acts or tasks are independent of the particular type of instructions set, storage media, processor or processing strategy and may be performed by software, hardware, integrated circuits, firmware, micro code and the like, operating alone or in combination. Likewise, processing strategies may include multiprocessing, multitasking, parallel processing and the like. In one embodiment, the instructions are stored on a removable media device for reading by local or remote systems. In other embodiments, the instructions are stored in a remote location for transfer through a computer network or over telephone lines. In yet other embodiments, the instructions are stored within a given computer, CPU, GPU, or system.

## Claims

1. Method for communicating messages between first and second user equipments (110, 120) in a LTE communications network (100), wherein the user equipments (110, 120) are in direct communication using LTE proximity services;
**characterized in that**
- both the first and second user equipments comprise automation-protocol enablers (114, 124) which receive requirements from first and second automation network nodes coupled to or implemented in connection with the first and second user equipments;
- the network (100) comprises an automation-protocol manager (142);
- the automation protocol enablers derive parameters from the requirements and transmit said parameters to the automation-protocol manager;
- the automation protocol manager
- creates a service-parameter set from the received parameters, and
- provides control information to network entities including at least one base station such that the direct communication between the first and second user equipments is in accordance with the parameter set.

2. The method of claim 1, wherein the automation protocol manager (142) communicates status information regarding the conformance of the direct communication with the parameter set to the automation protocol enablers.

3. The method of any of claims 1 or 2, wherein the protocol enablers (114, 124) receive automation-network-topology information, derive additional parameters thereof and transmit said additional parameters to the automation-protocol manager for inclusion in the service-parameter set.

4. The method of any of claims 1 to 3, wherein the automation-protocol enablers perform a conversion of a layer-2 automation protocol to a layer-3 transport protocol of the LTE communications network.

5. The method of any of claims 1 to 4, wherein the automation protocol manager hosts more than one master node of the automation network or is in communication with a register of more than one master node of the automation network and uses a scheduler for managing communication from the master nodes to slave nodes, thereby supporting a multi-master automation system.

6. A system for communicating messages between first and second user equipments (110, 120) in a LTE communications network (100), wherein the user equipments are in direct communication using LTE proximity services;
**characterized in that**
- both the first and second user equipments comprise automation-protocol enablers (114, 124) for receiving requirements from first and second automation network nodes coupled to or implemented in connection with the first and second user equipments;
- the network comprises an automation-protocol manager (142);
- the automation protocol-enablers (114, 124) comprise means for deriving parameters from the requirements and transmitting said parameters to the automation-protocol manager;
- the automation-protocol manager (142) comprises means for
- creating a service parameter set from the received parameters, and
- providing control information to network entities including at least one base station such that the direct communication between the first and second user equipments is in accordance with the parameter set.

7. The system of claim 1, wherein the automation-protocol manager comprises means for communicating status information regarding the conformance of the direct communication with the parameter set to the automation-protocol enablers.

8. The system of any of claims 6 or 7, wherein the protocol enablers comprise means for receiving automation-network-topology information, deriving additional parameters thereof and transmitting said additional parameters to the automation-protocol manager for inclusion in the service-parameter set.

9. The system of any of claims 6 to 8, wherein the automation-protocol enablers comprise means for performing a conversion of a layer-2 automation protocol to a layer-3 transport protocol of the LTE communications network.

10. The system of any of claims 6 to 9, wherein the automation protocol manager hosts more than one master node of the automation network or is in communication with a register of more than one master node of the automation network and uses a scheduler for managing communication from the master nodes to slave nodes, thereby supporting a multi-master automation system.

11. User equipment (110) of a LTE communications network (100) which is in direct communication using LTE proximity services with another user equipment (120) of the LTE communications network and which is coupled to or implemented in connection with an automation-network node, comprising an automation-protocol enabler (114) which receives requirements from the automation network node, derives parameters (160) from the requirements including priority and timing parameters and transmits said parameters to an automation-protocol manager (142) of the LTE communications network.

12. The user equipment of claim 11, wherein the automation-protocol enabler further comprises means for receiving status information from the automation-protocol manager regarding the conformance of the direct communication with the parameters.

13. The user equipment of any of claims 11 or 12, wherein the automation protocol enabler further comprises means for receiving automation-network-topology information, means for deriving additional parameters thereof and means for transmitting said additional parameters to the automation-protocol manager for inclusion in the service-parameter set.

14. The user equipment of any of claims 11 to 13, wherein the automation-protocol enabler comprises means for performing a conversion of a layer-2 automation protocol to a layer-3 transport protocol of the LTE communications network.

15. Proximity services node (140) of a LTE communications network controlling first and second user equipments which are in direct communication using LTE proximity services, comprising an automation protocol manager (140) for
- receiving parameters including priority and timing parameters derived from requirements received by automation-protocol enablers coupled to the first and second user equipments;
- creating a service-parameter set from the received parameters, and
- providing control information to network entities including the first and second user equipments such that the direct communication between the first and second user equipments is in accordance with the parameter set.

16. The proximity-services node of claim 15, wherein the automation-protocol manager comprises means for communicating status information regarding the conformance of the direct communication with the parameter set to the automation-protocol enablers.

17. The proximity-services node of any of claims 15 or 16, wherein the protocol manager comprises means for receiving additional parameters derived from automation-network-topology information and means for including said additional parameters in the service-parameter set.

18. The proximity-services node of any of claims 15 to 17, wherein the automation-protocol manager comprises means for hosting more than one master node of the automation network or means for communicating with a register of more than one master node of the automation network and scheduler means for managing communication from the master nodes to slave nodes, thereby supporting a multi-master automation system.
